# EUROPÄISCHE PATENTSCHRIFT

(11) **EP 4 418 005 B1**
(45) Veröffentlichungstag und Bekanntmachung des Hinweises auf die Patenterteilung: **25.11.2026**
(21) Anmeldenummer: 24157676.8
(22) Anmeldetag: 14.02.2024
(51) Int. Cl.: G01S 7/4865, G01S 17/931

(54) **VERFAHREN UND SCHALTUNG ZUR ERMITTLUNG DES ABSTANDES EINES OBJEKTS VON EINER OPTISCHEN TOF-MESSEINRICHTUNG SOWIE VERWENDUNG DIESES VERFAHRENS UND DIESER SCHALTUNG FÜR EINE LIDAR-VORRICHTUNG**
METHOD AND CIRCUIT FOR DETERMINING THE DISTANCE OF AN OBJECT FROM A TOF OPTICAL MEASUREMENT DEVICE, AND USE OF THIS METHOD AND CIRCUIT FOR A LIDAR DEVICE
PROCÉDÉ ET CIRCUIT POUR DÉTERMINER LA DISTANCE D'UN OBJET À PARTIR D'UN DISPOSITIF DE MESURE OPTIQUE DE TEMPS DE VOL ET UTILISATION DE CE PROCÉDÉ ET DUDIT CIRCUIT POUR UN DISPOSITIF LIDAR

(30) Priorität: 16.02.2023 EP 23156988
(43) Veröffentlichungstag der Anmeldung: 21.08.2024
(73) Patentinhaber: Elmos Semiconductor SE, 51379 Leverkusen (DE)
(72) Erfinder: Soto, Angel Jose, 01309 Dresden (DE)
(74) Vertreter: dompatent

(56) Entgegenhaltungen:
- WO-A1-2021/026241
- US-A1- 2019 056 497

## Beschreibung

Die Erfindung betrifft ein Verfahren zur Ermittlung des Abstandes eines Objekts von einer optischen ToF-Messeinrichtung durch Auswertung einer mittels der ToF-Messeinrichtung erhaltenen Abstandsaufnahme des Objekts, wobei die ToF-Messeinrichtung eine gepulst betreibbare Sendeeinheit für Detektionsstrahlung, ein Photodioden aufweisendes Photodiodenarray zum Empfang von an einem Objekt reflektierter Detektionsstrahlung und eine Signalverarbeitungseinheit aufweist. Allgemeiner ausgedrückt betrifft die Erfindung ein Optimal-Interpolationsfilter für die Auswertung von Histogrammen und insbesondere ein Verfahren zur Inter- oder Extrapolation zwischen benachbarten Klassen eines Histogramms.

Ferner betrifft die Erfindung auch eine Vorrichtung zur Durchführung der zuvor genannten Verfahren sowie die Anwendung dieser Verfahren und der Vorrichtung zur Ermittlung des Abstandes eines Objekts von einer optischen ToF-Messeinrichtung.

Schließlich betrifft die Erfindung auch die Verwendung der zuvor erwähnten Verfahren und Vorrichtung für eine LIDAR-Vorrichtung insbesondere eines Fahrzeugs.

Bei einer Vielzahl von Anwendungen ist die Auswertung von Histogrammen von Bedeutung. Ein Histogramm beschreibt die Häufigkeitsverteilung kardinal skalierter Merkmale, wobei die Daten in Klassen (englisch BINS) eingeteilt werden, die eine konstante oder variable Breite aufweisen können. Will man eine genauere Untersuchung anstellen, so ist unter Umständen eine Inter- oder Extrapolation zwischen benachbarten Klassen erforderlich.

Im Stand der Technik werden hierzu verschiedene mathematische Operationen durchgeführt, die unter anderem auch Divisionen umfassen. Derartige mathematische Operationen lassen sich leider nur mit vergleichsweise großem Aufwand in Form integrierter Schaltungen realisieren.

Aus WO-A-2021/026241 ist es bekannt, bei einer ToF-Kamera ein Histogramm der Zeitpunkte der von den Pixeln eines Sensors empfangenen Strahlung zu erstellen.

US-A-2019/0056497 zeigt eine Verwendung von Interpolationsfiltern mit entsprechend gewählten Koeffizienten.

Über die Art der mathematischen Operationen, die das Interpolationsfilter durchführt, wird in US-A-2019/0056497 nichts ausgesagt.

Aufgabe der Erfindung ist es daher, ein vereinfachtes Verfahren zur Ermittlung des statistisch betrachtet wahrscheinlichsten Ergebnisses eines definierten Ereignisses eines Prozesses, z.B. des statisch betrachtet wahrscheinlichsten Zeitpunkts für den Eintritt eines definierten Ereignisses eines Prozesses anzugeben. Dieses Verfahren kann insbesondere angewendet werden bei der Ermittlung des Abstandes eines Objekts von einer optischen ToF-Messeinrichtung.

Zur Lösung dieser Aufgabe wir mit der Erfindung ein Verfahren zur Ermittlung des Abstandes eines Objekts von einer optischen ToF-Messeinrichtung durch Auswertung einer mittels der ToF-Messeinrichtung erhaltenen Abstandsaufnahme des Objekts, wobei die ToF-Messeinrichtung eine gepulst betreibbare Sendeeinheit für Detektionsstrahlung, ein Photodioden aufweisendes Photodiodenarray zum Empfang von an einem Objekt reflektierter Detektionsstrahlung und eine Signalverarbeitungseinheit aufweist, vorgeschlagen, wobei bei dem Verfahren
- von der Sendeeinheit innerhalb eines Messintervalls mehrere Detektionsstrahlungspulse abgegeben werden, wobei mindestens eine der Photodioden des Photodiodenarrays für den potentiellen Empfang von reflektierter Detektionsstrahlung freigegeben wird, und
- mittels der Signalverarbeitungseinheit
   - nach jedem Detektionsstrahlungspuls und vor dem nächsten Detektionsstrahlungspuls untersucht wird, ob die mindestens eine oder jede während des Messintervalls freigegebene Photodiode des Photodiodenarrays jeweils eine Menge an elektrischer Ladung erzeugt hat, die einen Rauschschwellwert überschreitet, und, wenn dies der Fall ist, der Zeitpunkt ermittelt wird, zu dem dies, bezogen auf einen Referenzzeitpunkt wie z.B. den Beginn des Aussendens des Detektionsstrahlungspulses, erfolgt, sowie ermittelt wird, in welchem Zeitintervall einer Vielzahl von zeitlich sich einander anschließenden, auf den Referenzzeitpunkt bezogenen, mit Indizes gekennzeichneten Zeitintervallen die betreffende Menge an elektrischer Ladung erzeugt worden ist, für dieses Zeitintervall ein Ereignis registriert und damit den zeitlichen Unterschied zum Referenzzeitpunkt repräsentiert,
   - für jede Photodiode, für die ein oder mehrere Ereignisse registriert sind, nach dem letzten Detektionsstrahlungspuls des Messintervalls ein Histogramm, d.h. eine Verteilung der Häufigkeit der Ereignisse auf die Zeitintervalle erstellt wird,
   - anhand jedes Histogramms das Zeitintervall mit den meisten Ereignissen ermittelt und dieses Zeitintervall als Maximalereignis-Zeitintervall sowie dessen Index als Imax definiert wird,
   - anhand jedes Histogramms als N₋₁ die Anzahl der Ereignisse des nächsten zeitlich vor dem Maximalereignis-Zeitintervall liegenden Zeitintervalls und als N₋₂ die Anzahl der Ereignisse des zweitnächsten zeitlich vor dem Maximalereignis-Zeitintervall liegenden ermittelt wird,
   - anhand jedes Histogramms als N₊₁ die Anzahl der Ereignisse des nächsten zeitlich nach dem Maximalereignis-Zeitintervall liegenden Zeitintervalls und als N₊₂ die Anzahl der Ereignisse des zweitnächsten zeitlich nach dem Maximalereignis-Zeitintervall liegenden ermittelt wird, und
   - innerhalb des Maximalereignis-Zeitintervalls und entweder des nächsten zeitlich vor diesem liegenden oder nächsten zeitlich hinter diesem liegenden Zeitintervalls derjenige Zeitpunkt T_{A} ermittelt wird, der statistisch gesehen als Zeitpunkt für die Erzeugung der elektrischen Ladung der betrachteten Photodiode am wahrscheinlichsten ist und sich ergibt als ${T}_{A} = \left({N}_{+ 1}-{N}_{- 1}\right) {* k}_{1} + \left({N}_{+ 2}-{N}_{- 2}\right) * {k}_{2} + {T}_{Imax} * {k}_{0}$ mit
      - k₀ zwischen 0,75 und 1,25 oder zwischen 0,9 und 1,1 oder gleich 1,
      - k₁ gleich 1/2^{a} mit a zwischen 5 und 9 oder zwischen 6 und 8, wobei a ganzzahlige oder gebrochene Zahlen innerhalb dieser Bereiche annehmen kann, oder mit a gleich 7,
      - k₂ gleich 1/2^{b} mit b zwischen 9 und 13 oder zwischen 8 und 12, wobei b ganzzahlige oder gebrochene Zahlen innerhalb dieser Bereiche annehmen kann, oder mit b gleich 11 und
      - T_{Imax} als der den Mittenzeitpunkt des Maximalereignis-Zeitintervalls repräsentierende Zeitpunkt, bezogen auf den Referenzzeitpunkt,
      und
   - anhand der Differenz zwischen diesem Zeitpunkt und dem Referenzzeitpunkt sowie der Ausbreitungsgeschwindigkeit der Detektionsstrahlung der Abstand eines Detektionsstrahlungsreflektionspunktes des Objekts, von dem die betreffende Photodiode Detektionsstrahlung empfangen hat, von der ToF-Messeinrichtung ermittelt wird.

Zur Lösung der zuvor genannten Aufgabe dient ferner eine Schaltung zur Durchführung des zuvor genannten Verfahrens mit den Merkmalen des Anspruchs 6.

Für die Abstandsmessung kann bei diesem erfindungsgemäßen Anwendungsfall beispielsweise ein LIDAR-System genutzt werden, wie es beispielhaft in WO-A-2021/140160 beschrieben ist. Eine gepulst betriebene Sendeeinheit für vorzugsweise nicht sichtbare Detektionsstrahlung sendet Detektionsstrahlungspulse in einen Beobachtungsbereich hinein, in dem sich potenziell ein Objekt befindet. Mittels eines Photodiodenarrays als Empfangseinheit wird aus dem Beobachtungsraum reflektierte Detektionsstrahlung empfangen. Typischerweise wird dabei dergestalt vorgegangen, dass die Zeilen bzw. Spalten des typischerweise zweidimensionalen Photodiodenarrays sequenziell belichtet, d.h. aktiv geschaltet werden, und zwar innerhalb eines Messintervalls mehrfach gepulst (bis zu 1000-mal). Nach jedem Detektionsstrahlungspuls wird jede belichtete Photodiode daraufhin untersucht, ob sie eine Menge an elektrischer Ladung erzeugt hat, die einen Rauschschwellwert überschreitet.

Ist dies der Fall, so wird des Weiteren untersucht, zu welchem Empfangszeitpunkt, bezogen auf einen Referenzzeitpunkt, dies erfolgt ist. Bei dem Referenzzeitpunkt kann es sich beispielsweise um den Beginn des jeweiligen Detektionsstrahlungspulses handeln. Es wird also derjenige Zeitpunkt bestimmt, zu dem die betreffende Photodiode die Menge an elektrischer Ladung erzeugt hat. Dieser Zeitpunkt wird nun einem von mehreren Zeitintervallen, d.h. einer von mehreren Klassen bzw. Bins zugeordnet und entsprechend als ein Ereignis registriert.

Nach Abschluss des letzten Messintervalls, d.h. nach dem letzten Detektionsstrahlungspuls kann die statistische Auswertung der Messergebnisse erfolgen, indem untersucht wird, in welche Klasse (in welches Zeitintervall) die größte Anzahl von Ereignissen fällt (nachfolgend mit Maximalereignis-Zeitintervall bezeichnet). Der Index Imax dieses Zeitintervalls (Klasse bzw. Bins) wird registriert und es wird der Zeitpunkt T_{Imax} bezogen auf den Referenzzeitpunkt ermittelt, der dem Mittelpunkt des Maximalereignis-Zeitintervalls zugeordnet ist.

Entsprechend der obigen Beschreibung werden nun die Anzahlen N₋₁, N₋₂, N₊₁ und N₊₂ der Ereignisse in den zwei zu beiden Seiten des Maximalereignis-Zeitintervalls zeitlich nächstliegenden Paaren von benachbarten Zeitintervallen ermittelt.

Die weitere Berechnung erfolgt, wie oben beschrieben, womit sich am Ende ein Wert ergibt, der statistisch betrachtet am wahrscheinlichsten denjenigen Zeitpunkt definiert, zu dem die betreffende Photodiode die maximale Menge an elektrischer Ladung erzeugt hat. Dieser Zeitpunkt, der auf Grund einer Inter- oder Extrapolation ermittelt worden ist, repräsentiert unter Berücksichtigung der Ausbreitungsgeschwindigkeit der Detektionsstrahlung sowie des Referenzzeitpunkts (beispielsweise Beginn des Detektionsstrahlungspulses) und der Relativanordnung von Sendeeinheit bzw. deren Detektionsstrahlungsquelle und Photodiodenarray in Bezug auf deren Abstände zum Objekt den Abstand der ToF-Messeinrichtung von dem Detektionstrahlungsreflektionspunkt des Objekts, von dem die betreffende Photodiode Detektionsstrahlung empfangen hat. Liegen die Detektionsstrahlungsquelle und das Photodiodenarray auf beispielsweise einer gemeinsamen Linie, die orthogonal zur Abstrahlrichtung (Ausbreitungsrichtung) der Detektionsstrahlung verläuft, ist der Abstand gleich der Hälfte der Zeitdifferenz zwischen Referenzzeitpunkt (Beginn des Detektionsstrahlungspulses) und dem errechneten, statistisch wahrscheinlichsten Empfangszeitpunkt T_{A} multipliziert mit der Ausbreitungsgeschwindigkeit der Detektionsstrahlung. Vereinfacht ausgedrückt, ergibt sich damit der Abstand des Objekts von der ToF-Messeinrichtung, die typischerweise sowohl die Sendeeinheit als auch die Empfangseinheit (Photodiodenarray) in einem Gerät vereinigt.

Wird dieses Procedere für sämtliche Photodioden des Photodiodenarrays durchgeführt, kann so die "Abstandsaufnahme" des Objekts erstellt werden.

In der praktischen Umsetzung wird die Zeitdauer, innerhalb der ab dem Referenzzeitpunkt der Empfang von Reflektionsstrahlung erwartet wird (diese Zeitdauer berechnet sich beispielsweise anhand der Ausbreitungsgeschwindigkeit der Detektionsstrahlung und der maximal erfassbaren Entfernung des Objekts von der ToF-Messeinrichtung) in einzelne aneinandergrenzende und aufeinanderfolgende Zeitintervalle (Klassen) unterteilt. Jedes Zeitintervall ist durch einen Index gekennzeichnet, der ausgehend von dem Referenzzeitpunkt, den dem Mittelpunkt des Zeitintervalls entsprechenden Zeitpunkt repräsentiert. Die Zeitintervalle können dabei gleich lang oder unterschiedlich lang sein (oder allgemeiner ausgedrückt: die Klassen können dabei gleich große oder unterschiedlich große Wertebereiche umfassen). Erstreckt sich also das erste Zeitintervall von 0 ms bis 10 ms und das zweite Zeitintervall von 10 ms bis 20 ms ab dem Referenzzeitpunkt, so repräsentiert der Index 1 für das erste Zeitintervall den Zeitpunkt 5 ms und der Index 2 des zweiten Zeitintervalls den Zeitpunkt 15 ms nach dem Referenzzeitpunkt.

Der erfindungsgemäß errechnete statistisch betrachtet wahrscheinlichste Zeitpunkt ergibt sich also als interpolierter neuer Index, der anhand seiner Lage auf der Zeitachse in den dieser Lage entsprechenden Zeitpunkt umzurechnen ist.

Die Menge an Daten, die erfindungsgemäß zu verarbeiten sind, ist sehr hoch. Daher bedarf es einer Hardware, die diese große Menge an Daten vorzugsweise in Echtzeit verarbeiten kann. Das gelingt wiederum dadurch, dass das erfindungsgemäße Verfahren lediglich geringe Rechenleistung für die mathematischen Operationen benötigt und diese geringen Rechenleistungen auch noch mit hoher Performance durchgeführt werden können, so dass es in kürzester Zeit gelingt, diese großen Datenmengen zu verarbeiten.

In vorteilhafter Ausgestaltung des zuvor beschriebenen erfindungsgemäßen Anwendungsfalls ist vorgesehen, dass innerhalb des Maximalereignis-Zeitintervall und dem nächsten zeitlich vor diesem liegenden und dem nächsten zeitlich nach diesem liegenden Zeitintervall, dem die größere Anzahl an Ereignissen zugeordnet ist, der statistisch betrachtet wahrscheinlichste Zeitpunkt T_{A} berechnet wird.

Wenn man die Ansammlung elektrischer Ladung größer als ein Schwellwert bei dem zuvor beschriebenen Anwendungsfall als allgemein "Ereignis" betrachtet und den Zeitpunkt, zu dem dies im zuvor beschriebenen erfindungsgemäßen Anwendungsfall eintritt, als Ergebnis des Ereignisses interpretiert und verallgemeinert, betrifft die Lösung der obigen Aufgabe ferner eine Schaltung zur Durchführung eines Verfahrens mit den Merkmalen des Anspruchs 6.

Ein Beispiel für einen derart erfindungsgemäß statistisch zu untersuchenden Prozess ist das, was weiter oben im Zusammenhang mit Objekt-Abstandsmessung erläutert worden ist. Es sind andere physikalische Prozesse denkbar, die erfindungsgemäß statistisch auszuwerten und zu untersuchen sind. Beispiele für derartige weitere Prozesse sind z.B. Abstandsmessungen per Radar oder Ultraschall und allgemein Anwendungen von Laufzeitmessungen aller Art z.B. in der Zeitberechnungsreflektomie (Time Domain Reflectometry).

Erfindungsgemäß wurde erkannt, dass die Berechnung des wahrscheinlichsten Ergebnisses eines Ereignisses eines Prozesses auf die vergleichsweise einfach in Hardwaretechnik mittels integrierter Schaltungen realisierbaren Schritte der Addition bzw. Subtraktion und der Multiplikation zurückgeführt werden kann.

Hierzu wird anhand der statistisch untersuchten Ergebnisse eines Prozessereignisses, die einzelnen Klassen des Histogramms zugeordnet und für diese Klassen registriert sind, diejenige Klasse ermittelt, in die die größte Anzahl von Ergebnissen fällt. Für die spätere Berechnung ist lediglich die Ordnungsnummer, d.h. der Index der Klasse bzw. der des Bins erforderlich.

Ferner werden für die Berechnung die Anzahlen der Ereignisse, die vier weiteren Klassen zugeordnet worden sind, benötigt, und zwar der beiden Klassen mit den gegenüber der Maximalereignisklasse nächstkleineren und zweitnächstkleineren Indizes und mit den gegenüber der Maximalereignisklasse nächsthöheren und zweithöchstkleineren Indizes.

Es wird die Differenz der Anzahl der Ereignisse der beiden Klassen mit den jeweils nächstkleineren und nächstgrößeren Indizes gegenüber dem Index der Maximalereignisklasse gebildet und anschließend wird diese Differenz mit dem Koeffizienten k₁ multipliziert. Ferner wird die Differenz aus den Anzahlen der Ereignisse der beiden Klassen mit den gegenüber der Maximalereignisklasse zweitnächstkleineren und zweitnächstgrößeren Indizes gebildet, wobei diese Differenz mit dem Koeffizienten k₂ multipliziert wird.

Schließlich wird die Summe aus den beiden Produkten und dem Produkt des Index der Maximalereignisklasse mit dem Koeffizienten k₀ gebildet. Das Ergebnis ist ein Wert, der das wahrscheinlichste Ergebnis des Prozessereignisses repräsentiert.

Die Wertebereiche bzw. konkreten Werte für die Koeffizienten k₀, k₁ und k₂ ergeben sich aus empirischen Untersuchungen sowie theoretischen Überlegungen. Vorzugsweise handelt es sich bei den Koeffizienten k₁ und k₂ um die Kehrwerte von Potenzen von 2. Der Koeffizient k₁ kann zwischen dem Kehrwert von 2⁹ und 2⁵ oder zwischen 1/256 und 1/64 oder zwischen 1/192 und 1/96 liegen und insbesondere gleich 1/128, d.h. gleich dem Kehrwert von 2⁷ sein. Ferner kann der Koeffizient k₂ zwischen dem Kehrwert von 2¹³ und 2⁹ oder zwischen 1/4096 und 1/1024 oder zwischen 1/3072 und 1/1536 liegen und insbesondere gleich 1/2048, d.h. gleich dem Kehrwert von 2¹¹ sein.

Die Berechnung lässt sich sehr einfach als Hardware in Halbleitermaterial realisieren. Sämtliche Operationen laufen auf Verschiebeoperationen hinaus, womit die Berechnung schließlich auch sehr schnell durchgeführt werden kann.

In weiterer zweckmäßiger Ausgestaltung der Erfindung kann entsprechend der oben genannten Weiterbildung des erfindungsgemäßen Anwendungsfalls vorgesehen sein, dass innerhalb der Wertebereiche der Maximalereignisklasse und derjenigen Klasse mit dem nächstkleineren Index Imax-1 oder mit dem nächstgrößeren Index Imax+2, der die größere Anzahl an Ergebnissen hat, derjenige Wert W_{E} ermittelt wird, der dem wahrscheinlichsten Ergebnis zuzuordnen ist.

Eine Schaltung zur Durchführung des verallgemeinerten erfindungsgemäßen Verfahrens ist beispielsweise versehen mit,
- einer ersten Substrahiereinheit mit einem ersten Eingang für ein die Anzahl N₋₁ repräsentierendes Signal, einem zweiten Eingang für ein die Anzahl N₊₁ repräsentierendes Signal und mit einem Ausgang für ein die Differenz beider Eingangssignale bildendes Ausgangssignal,
- einer zweiten Substrahiereinheit mit einem ersten Eingang für ein die Anzahl N₋₂ repräsentierendes Signal, einem zweiten Eingang für ein die Anzahl N₊₂ repräsentierendes Signal und mit einem Ausgang für ein die Differenz beider Eingangssignale bildendes Ausgangssignal,
- einer ersten Multiplikationseinheit mit einem ersten Eingang für das Ausgangssignal der ersten Substrahiereinheit, einem zweiten Eingang für ein den Koeffizienten k₁ repräsentierendes Signal und mit einem Ausgang für ein das Produkt aus beiden Eingangssignalen bildendes Ausgangssignal,
- einer zweiten Multiplikationseinheit mit einem ersten Eingang für das Ausgangssignal der zweiten Substrahiereinheit, einem zweiten Eingang für ein den Koeffizienten k₂ repräsentierendes Signal und mit einem Ausgang für ein das Produkt aus beiden Eingangssignalen bildendes Ausgangssignal,
- einer dritten Multiplikationseinheit für ein den Index Imax der Maximalereignisklasse repräsentierendes Signal, einem zweiten Eingang für ein den Koeffizienten k₀ repräsentierendes Signal und mit einem Ausgang für ein das Produkt aus beiden Eingangssignalen bildendes Ausgangssignal und
- einer Addiereinheit mit einem ersten Eingang für das Ausgangssignal der ersten Multiplikationseinheit, einem zweiten Eingang für das Ausgangssignal der zweiten Multiplikationseinheit, einem dritten Eingang für das Ausgangssignal der dritten Multiplikationseinheit und mit einem Ausgang für ein die Summe der drei Eingangssignale bildendes und damit die Ordnungsnummer der Subklasse repräsentierenden Ergebnissignal, das den Wert W_{E} des statistisch wahrscheinlichsten Ergebnisses repräsentiert.

Zur Lösung der oben genannten Aufgabe wird erfindungsgemäß ferner die Verwendung der Verfahren und Schaltungen für eine LIDAR-Vorrichtung insbesondere eines Fahrzeugs vorgeschlagen, wobei die LIDAR-Vorrichtung versehen ist mit der Sendeeinheit für gepulste Detektionsstrahlung und dem ein- oder zweidimensionalen Photodiodenarray und einer der Sendeeinheit zugeordneten Sendeoptik für die Detektionsstrahlungspulse sowie einer dem Photodiodenarray zugeordneten Empfangsoptik für von einem Objekt reflektierten Detektionsstrahlungspulse und mit der Signalverarbeitungseinheit, wobei bei Verwendung der Schaltung diese Teil der Signalverarbeitungseinheit ist.

Die Erfindung wird nachfolgend anhand eines Ausführungsbeispiels sowie unter Bezugnahme auf die Zeichnung näher erläutert. Im Einzelnen zeigen dabei:
- Fig. 1: eine Draufsicht auf ein Fahrzeug mit einer erfindungsgemäßen Vorrichtung zur Ermittlung des Abstandes des Objekts vom Fahrzeug,
- Fig. 2: ein Histogramm der Verteilung der Häufigkeit der Ereignisse über die Zeitintervalle, innerhalb derer die Ereignisse eingetreten sind, und
- Fig. 3: schematisch die Hardware-Komponenten zur Berechnung der Inter- bzw. Extrapolation zwischen den Indizes (Zeitintervallen) ober- und unterhalb des Zeitintervalls mit den meisten registrierten Ereignissen.

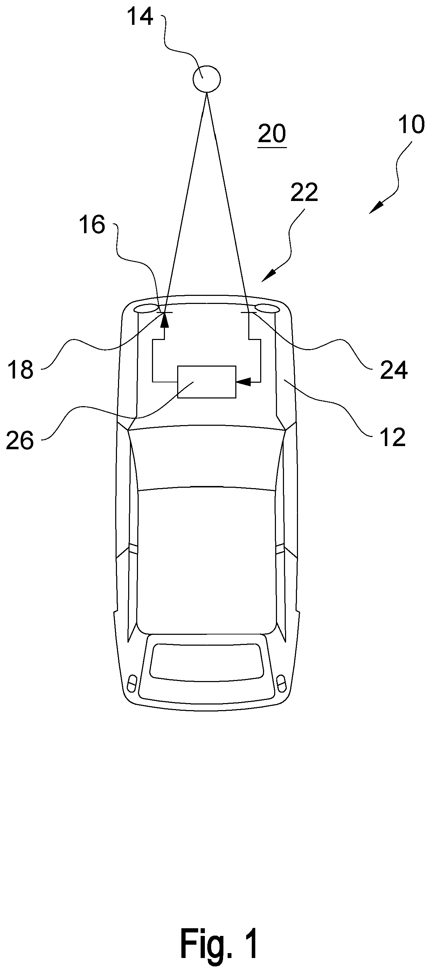

Fig. 1 zeigt schematisch die Hauptkomponenten einer Vorrichtung 10 zur Ermittlung des Abstandes eines Fahrzeugs 12 von einem Objekt 14. Die Vorrichtung 10 weist eine Sendeeinheit 16 mit einer Detektionsstrahlungsquelle 18 auf, die einzelne Detektionsstrahlungspulse aussendet (in diesem Ausführungsbeispiel in den Bereich 20 vor dem Fahrzeug 12). Nach Reflektion an einem sich potentiell im Bereich 20 befindlichen Objekt 14 gelangt die reflektierte Detektionsstrahlung zu einer Empfangseinheit 22, die ein Photodiodenarray 24 mit einer Vielzahl von ein- oder zweidimensional angeordneten Photodioden aufweist. Eine Signalverarbeitungseinheit 26 mit Rechnereinheit, Speichern, Analog/Digital-Konvertern sowie I/O-Schnittstellen steuert einerseits die Sendeeinheit 16 an und wertet andererseits die von der Empfangseinheit 22 kommenden Signale aus.

Die Messung erfolgt innerhalb mehrerer aufeinanderfolgender Messintervalle. Pro Messintervall sendet die Detektionsstrahlungsquelle 18 beispielsweise bis zu 1000 Detektionsstrahlungspulse aus. Wenn sich das Objekt 14 im Bereich 20 befindet, so erfasst die Empfangseinheit 22 innerhalb jedes Messintervalls bis zu 1000 Ereignisse, nämlich bis zu 1000 mal die Erzeugung elektrischer Ladung durch die Photodioden. Pro Messintervall werden jeweils andere der Photodioden des Photodiodenarrays aktiv geschaltet.

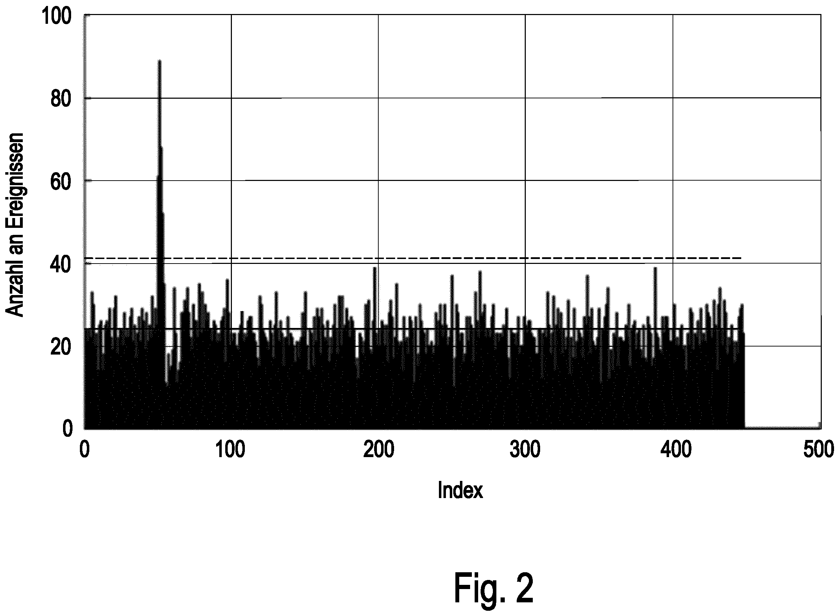

Ein typisches Beispiel für die Häufigkeitsverteilung der in einem Messintervall auftretenden Ergebnisse, d.h. die Verteilung der Anzahl der Ergebnisse über die Zeit betrachtet, ist in Fig. 2 gezeigt. Auf der X-Achse ist der Index bzw. der Bin aufgetragen. Jeder Index repräsentiert ein Zeitintervall, innerhalb dessen nach dem Aussenden eines Detektionsstrahlungspulses die jeweils aktiven Photodioden elektrische Ladung erzeugt haben. Auf der Y-Achse ist die Anzahl der Ereignisse, also die Anzahl der Erzeugung elektrischer Ladung um mehr als ein Schwellwert gezeigt.

Zu erkennen ist, dass etwa im Bereich des Index 50 die größte Anzahl an Ereignissen zu verzeichnen ist. Setzt man nun einen Ereignisanzahl-Mindestwert an (im Beispiel der Fig. 2 liegt dieser bei etwas mehr als 40), so muss nun lediglich noch eine geringe Anzahl von Bins bzw. Indizes ausgewertet werden.

Jeder Index repräsentiert den Mittenzeitpunkt eines Zeitintervalls. Man könnte nun davon ausgehen, dass der statistisch wahrscheinlichste Zeitpunkt für den Empfang der Detektionsreflektionsstrahlung der Index des Zeitintervalls ist, in das die meisten Ereignisse fallen. Vielmehr ist es aber so, dass dieser statistisch wahrscheinlichste Empfangszeitpunkt sich durch Inter- oder Extrapolation der Ereignisse ergibt, die auf mehrere Indizes verteilt sind. Erfindungsgemäß wird der Index mit der größten Anzahl an Ereignissen ermittelt. Ferner werden die Anzahlen an Ereignissen ermittelt, die in die beiden nächstkleineren und die beiden nächstgrößeren Indizes (Zeitintervalle) fallen. Die Berechnung des statistisch wahrscheinlichsten Empfangszeitpunkts ergibt sich dann aus der folgenden Formel: ${T}_{A} = \left({N}_{+ 1}-{N}_{- 1}\right) {* k}_{1} + \left({N}_{+ 2}-{N}_{- 2}\right) * {k}_{2} + {T}_{Imax} * {k}_{0}$ wobei Imax das Maximal-Ereignis-Zeitintervall, N₊₁ die Anzahl an Ereignissen im nächstgrößeren Zeitintervall, N₊₂ die Anzahl der Ereignisse im zweitnächsten Zeitintervall, N₋₁ die Anzahl an Ereignissen im nächstkleineren Zeitintervall, N₋₂ die Anzahl an Ereignissen im zweitnächstkleineren Zeitintervall, k₀ gleich 1, k₁ gleich 1/128 und k₂ gleich 1/2048 ist.

Wenn man nun die Ausbreitungsgeschwindigkeit der Detektionsstrahlung in Betracht zieht und darüber hinaus die Relativposition bzw. Relativanordnung von Detektionsstrahlungsquelle und Photodiodenarray in Relation zu der ermittelten Differenz aus Referenzzeitpunkt und statistisch wahrscheinlichstem Empfangszeitpunkt berücksichtigt, kann man den Abstand des Objekts zum (strenggenommen) Photodiodenarray und verallgemeinert zum Fahrzeug schließen.

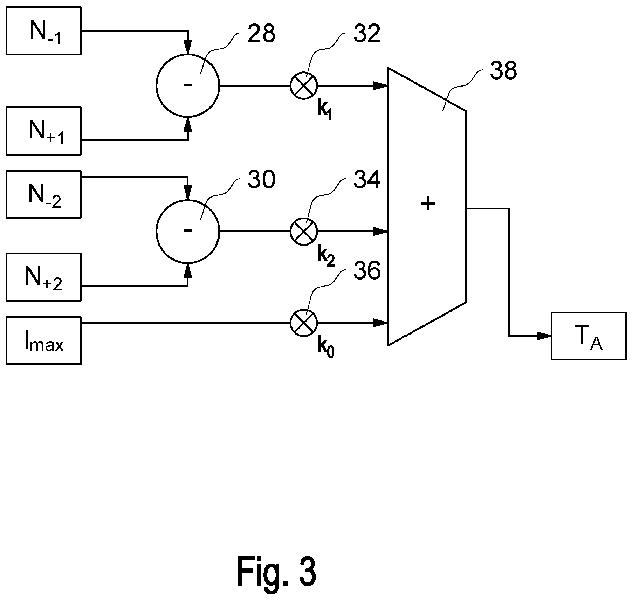

Eine mögliche Hardware-Realisierung zur Berechnung der zuvor genannten Formel ist in Fig. 3 gezeigt. Die Differenz der Anzahlen N₋₁ und N₊₁ wird in einer ersten Subtrahiereinheit 28 errechnet, während die Differenz aus N₋₂ und N₊₂ in einer zweiten Subtrahiereinheit 30 ermittelt wird. Das von der Subtrahiereinheit 28 gelieferte Ergebnis wird mit dem Koeffizienten k₁ in der ersten Multipliziereinheit 32 multipliziert, während das Ergebnis der zweiten Subtrahiereinheit 30 in einer zweiten Multipliziereinheit 34 mit dem Koeffizienten k₂ multipliziert wird. Der Index Imax wird in einer dritten Multipliziereinheit 36 mit dem Koeffizienten k₀ multipliziert. Die drei Produktergebnisse werden in einer Addiereinheit 38 addiert und ergeben einen neuen Index, der dem statistisch wahrscheinlichsten, durch Inter- bzw. Extrapolation errechneten Empfangszeitpunkt T_{A} für die von dem jeweils aktiv geschalteten Photodioden von einem Reflektionspunkt des Objekts empfangenen Detektionsstrahlung repräsentiert.

### BEZUGSZEICHENLISTE

- 10: Vorrichtung
- 12: Fahrzeug
- 14: Objekt
- 16: Sendeeinheit
- 18: Detektionsstrahlungsquelle
- 20: Bereich
- 22: Empfangseinheit
- 24: Photodiodenarray
- 26: Signalverarbeitungseinheit
- 28: erste Subtrahiereinheit
- 30: zweite Subtrahiereinheit
- 32: erste Multipliziereinheit
- 34: zweite Multipliziereinheit
- 36: dritte Multipliziereinheit
- 38: Addiereinheit

## Patentansprüche

1. Verfahren zur Ermittlung des Abstandes eines Objekts von einer optischen ToF-Messeinrichtung durch Auswertung einer mittels der ToF-Messeinrichtung erhaltenen Abstandsaufnahme des Objekts, wobei die ToF-Messeinrichtung eine gepulst betreibbare Sendeeinheit für Detektionsstrahlung, ein Photodioden aufweisendes ein- oder zweidimensionales Photodiodenarray zum Empfang von an einem Objekt reflektierter Detektionsstrahlung und eine Signalverarbeitungseinheit aufweist, wobei bei dem Verfahren
- von der Sendeeinheit (16) innerhalb eines Messintervalls mehrere Detektionsstrahlungspulse abgegeben werden, wobei mindestens eine der Photodioden des Photodiodenarrays (24) für den potentiellen Empfang von reflektierter Detektionsstrahlung freigegeben wird, und
- mittels der Signalverarbeitungseinheit (26)
- nach jedem Detektionsstrahlungspuls und vor dem nächsten Detektionsstrahlungspuls untersucht wird, ob die mindestens eine oder jede während des Messintervalls freigegebene Photodiode des Photodiodenarrays (24) jeweils eine Menge an elektrischer Ladung erzeugt hat, die einen Rauschschwellwert überschreitet, und, wenn dies der Fall ist,
- der Zeitpunkt ermittelt wird, zu dem, bezogen auf einen Referenzzeitpunkt wie z.B. den Beginn des Aussendens des Detektionsstrahlungspulses, die Menge an elektrischer Ladung erzeugt worden ist, und
- ermittelt wird, in welchem Zeitintervall einer Vielzahl von zeitlich sich einander anschließenden, auf den Referenzzeitpunkt bezogenen, mit Indizes gekennzeichneten Zeitintervallen die betreffende Menge an elektrischer Ladung erzeugt worden ist, und
- für dieses Zeitintervall ein Ereignis registriert, wobei jeder Index den Mittenzeitpunkt eines Zeitintervalls registriert und damit den zeitlichen Unterschied zum Referenzzeitpunkt repräsentiert,
- für jede Photodiode, für die ein oder mehrere Ereignisse registriert sind, nach dem letzten Detektionsstrahlungspuls des Messintervalls ein Histogramm, d.h. eine Verteilung der Häufigkeit der Ereignisse auf die Zeitintervalle erstellt wird,
- anhand jedes Histogramms das Zeitintervall mit den meisten Ereignissen ermittelt und dieses Zeitintervall als Maximalereignis-Zeitintervall sowie dessen Index als Imax definiert wird,
- anhand jedes Histogramms als N₋₁ die Anzahl der Ereignisse des nächsten zeitlich vor dem Maximalereignis-Zeitintervall liegenden Zeitintervalls und als N₋₂ die Anzahl der Ereignisse des zweitnächsten zeitlich vor dem Maximalereignis-Zeitintervall liegenden ermittelt wird,
- anhand jedes Histogramms als N₊₁ die Anzahl der Ereignisse des nächsten zeitlich nach dem Maximalereignis-Zeitintervall liegenden Zeitintervalls und als N₊₂ die Anzahl der Ereignisse des zweitnächsten zeitlich nach dem Maximalereignis-Zeitintervall liegenden ermittelt wird, und
- innerhalb des Maximalereignis-Zeitintervalls und entweder des nächsten zeitlich vor diesem liegenden oder nächsten zeitlich hinter diesem liegenden Zeitintervalls derjenige Zeitpunkt T_{A} ermittelt wird, der statistisch gesehen als Zeitpunkt für die Erzeugung der elektrischen Ladung der betrachteten Photodiode am wahrscheinlichsten ist und sich ergibt als ${T}_{A} = \left({N}_{+ 1}-{N}_{- 1}\right) {* k}_{1} + \left({N}_{+ 2}-{N}_{- 2}\right) * {k}_{2} + {T}_{Imax} * {k}_{0}$ mit
- k₀ zwischen 0,75 und 1,25 oder zwischen 0,9 und 1,1 oder gleich 1,
- k₁ gleich 1/2^{a} mit a zwischen 5 und 9 oder zwischen 6 und 8, wobei a ganzzahlige oder gebrochene Zahlen innerhalb dieser Bereiche annehmen kann, oder mit a gleich 7,
- k₂ gleich 1/2^{b} mit b zwischen 9 und 13 oder zwischen 8 und 12, wobei b ganzzahlige oder gebrochene Zahlen innerhalb dieser Bereiche annehmen kann, oder mit b gleich 11 und
- T_{Imax} als der den Mittenzeitpunkt des Maximalereignis-Zeitintervalls repräsentierende Zeitpunkt, bezogen auf den Referenzzeitpunkt,
und
- anhand der Differenz zwischen diesem Zeitpunkt und dem Referenzzeitpunkt sowie der Ausbreitungsgeschwindigkeit der Detektionsstrahlung der Abstand eines Detektionsstrahlungsreflektionspunktes des Objekts, von dem die betreffende Photodiode Detektionsstrahlung empfangen hat, von der ToF-Messeinrichtung ermittelt wird.

2. Verfahren nach Anspruch 1, **dadurch gekennzeichnet, dass** der statistisch betrachtet wahrscheinlichste Zeitpunkt T_{A} berechnet wird als innerhalb des Maximalereignis-Zeitintervalls und demjenigen der beiden zeitlich vor und zeitlich nach dem Maximalereignis-Zeitintervall nächst benachbarten Zeitintervall liegend, dem die größere Anzahl an Ereignissen zugeordnet ist.

3. Schaltung zur Durchführung des Verfahrens nach Anspruch 1 oder 2, mit
- einer ersten Substrahiereinheit (28) mit einem ersten Eingang für ein die Anzahl N₋₁ repräsentierendes Signal, einem zweiten Eingang für ein die Anzahl N₊₁ repräsentierendes Signal und mit einem Ausgang für ein die Differenz beider Eingangssignale bildendes Ausgangssignal,
- einer zweiten Substrahiereinheit (30) mit einem ersten Eingang für ein die Anzahl N₋₂ repräsentierendes Signal, einem zweiten Eingang für ein die Anzahl N₊₂ repräsentierendes Signal und mit einem Ausgang für ein die Differenz beider Eingangssignale bildendes Ausgangssignal,
- einer ersten Multiplikationseinheit (32) mit einem ersten Eingang für das Ausgangssignal der ersten Substrahiereinheit (28), einem zweiten Eingang für ein den Koeffizienten k₁ repräsentierendes Signal und mit einem Ausgang für ein das Produkt aus beiden Eingangssignalen bildendes Ausgangssignal,
- einer zweiten Multiplikationseinheit (34) mit einem ersten Eingang für das Ausgangssignal der zweiten Substrahiereinheit (30), einem zweiten Eingang für ein den Koeffizienten k₂ repräsentierendes Signal und mit einem Ausgang für ein das Produkt aus beiden Eingangssignalen bildendes Ausgangssignal,
- einer dritten Multiplikationseinheit (36) für ein den Index Imax der Maximalereignisklasse repräsentierendes Signal, einem zweiten Eingang für ein den Koeffizienten k₀ repräsentierendes Signal und mit einem Ausgang für ein das Produkt aus beiden Eingangssignalen bildendes Ausgangssignal und
- einer Addiereinheit (38) mit einem ersten Eingang für das Ausgangssignal der ersten Multiplikationseinheit (32), einem zweiten Eingang für das Ausgangssignal der zweiten Multiplikationseinheit (34), einem dritten Eingang für das Ausgangssignal der dritten Multiplikationseinheit (36) und mit einem Ausgang für ein die Summe der drei Eingangssignale bildendes und damit die Ordnungsnummer der Subklasse repräsentierenden Ergebnissignal, das den Wert W_{E} des statistisch wahrscheinlichsten Ergebnisses repräsentiert.

4. Verwendung des Verfahrens nach Anspruch 1 oder 2 für eine LIDAR-Vorrichtung, insbesondere eines Fahrzeugs, mit der Sendeeinheit (16) für gepulste Detektionsstrahlung und dem ein- oder zweidimensionalen Photodiodenarray (24) und einer der Sendeeinheit zugeordneten Sendeoptik für die Detektionsstrahlungspulse sowie einer dem Photodiodenarray (24) zugeordneten Empfangsoptik für von einem Objekt reflektierten Detektionsstrahlungspulse und mit der Signalverarbeitungseinheit (26).

5. Verwendung der Schaltung nach Anspruch 3 für eine LIDAR-Vorrichtung, insbesondere eines Fahrzeugs, mit der Sendeeinheit (16) für gepulste Detektionsstrahlung und dem ein- oder zweidimensionalen Photodiodenarray (24) und einer der Sendeeinheit zugeordneten Sendeoptik für die Detektionsstrahlungspulse sowie einer dem Photodiodenarray (24) zugeordneten Empfangsoptik für von einem Objekt reflektierten Detektionsstrahlungspulse und mit der Signalverarbeitungseinheit (26), wobei die Signalverarbeitungseinheit (26) die Schaltung nach Anspruch 3 aufweist.

6. Schaltung zur Durchführung eines Verfahrens zur Ermittlung des statistisch betrachtet wahrscheinlichsten Ergebnisses eines definierten Ereignisses eines physikalischen Prozesses, z.B. des statistisch betrachtet wahrscheinlichsten Zeitpunkts für den Eintritt eines definierten Ereignisses eines physikalischen Prozesses,
- wobei bei dem Verfahren
- der Prozess gemäß einer vorbestimmten Anzahl wiederholt durchgeführt wird und das jeweilige Ereignis-Ergebnis oder ein dieses repräsentierender Parameter registriert wird,
- die Ereignis-Ergebnisse bzw. die diese repräsentierenden Parameter, also z.B. die Zeitpunkte, zu denen die Ereignisse eingetroffen sind, einzelnen aufeinanderfolgenden Ergebniswertebereiche, z.B. einzelnen aufeinanderfolgenden Zeitintervallen zugeordnet werden, die mit Indizes gekennzeichnete Klassen eines Histogramms bilden, welches die Verteilung der Häufigkeit der Ereignis-Ergebnisse beschreibt,
- die Klasse mit den meisten Ereignis-Ergebnissen als Maximalereignisklasse ermittelt und ihr Index als Imax definiert wird,
- als N₋₁ die Anzahl der Ereignis-Ergebnisse der Klasse mit dem gegenüber der Maximalereignisklasse nächstkleineren Index Imax-1 und als N₋₂ die Anzahl der Ereignis-Ergebnisse der Klasse mit dem gegenüber der Maximalereignisklasse zweitnächstkleineren Index Imax-2 definiert wird,
- als N₊₁ die Anzahl der Ereignis-Ergebnisse der Klasse mit dem gegenüber der Maximalereignisklasse nächstgrößeren Index Imax+1 und als N₊₂ die Anzahl der Ereignis-Ergebnisse der Klasse mit dem gegenüber der Maximalereignisklasse zweitnächstgrößeren Index Imax+2 definiert wird und
- innerhalb der Ergebniswertebereiche der Maximalereignisklasse und der Klasse mit entweder dem nächstkleineren Index Imax-1 oder dem nächstgrößeren Index Imax+1 derjenige Wert W_{E} ermittelt wird, der dem wahrscheinlichsten Ergebnis des Ereignisses zuzuordnen ist, indem berechnet wird: ${W}_{E} = \left({N}_{+ 1}-{N}_{- 1}\right) {* k}_{1} + \left({N}_{+ 2}-{N}_{- 2}\right) * {k}_{2} + {W}_{Imax} * {k}_{0 ,}$ mit
- k₀ zwischen 0,75 und 1,25 oder zwischen 0,9 und 1,1 oder gleich 1,
- k₁ gleich 1/2^{a} mit a zwischen 5 und 9 oder zwischen 6 und 8, wobei a ganzzahlige oder gebrochene Zahlen innerhalb dieser Bereiche annehmen kann, oder mit a gleich 7,
- k₂ gleich 1/2^{b} mit b zwischen 9 und 13 oder zwischen 8 und 12, wobei b ganzzahlige oder gebrochene Zahlen innerhalb dieser Bereiche annehmen kann, oder mit b gleich 11 und
- W_{Imax} als der die Mitte des Ergebniswertebereichs der Maximalereignisklasse Imax repräsentierende Wert,
- wobei die Schaltung versehen ist mit
- einer ersten Substrahiereinheit (28) mit einem ersten Eingang für ein die Anzahl N₋₁ repräsentierendes Signal, einem zweiten Eingang für ein die Anzahl N₊₁ repräsentierendes Signal und mit einem Ausgang für ein die Differenz beider Eingangssignale bildendes Ausgangssignal,
- einer zweiten Substrahiereinheit (30) mit einem ersten Eingang für ein die Anzahl N₋₂ repräsentierendes Signal, einem zweiten Eingang für ein die Anzahl N₊₂ repräsentierendes Signal und mit einem Ausgang für ein die Differenz beider Eingangssignale bildendes Ausgangssignal,
- einer ersten Multiplikationseinheit (32) mit einem ersten Eingang für das Ausgangssignal der ersten Substrahiereinheit (28), einem zweiten Eingang für ein den Koeffizienten k₁ repräsentierendes Signal und mit einem Ausgang für ein das Produkt aus beiden Eingangssignalen bildendes Ausgangssignal,
- einer zweiten Multiplikationseinheit (34) mit einem ersten Eingang für das Ausgangssignal der zweiten Substrahiereinheit (30), einem zweiten Eingang für ein den Koeffizienten k₂ repräsentierendes Signal und mit einem Ausgang für ein das Produkt aus beiden Eingangssignalen bildendes Ausgangssignal,
- einer dritten Multiplikationseinheit (36) für ein den Index Imax der Maximalereignisklasse repräsentierendes Signal, einem zweiten Eingang für ein den Koeffizienten k₀ repräsentierendes Signal und mit einem Ausgang für ein das Produkt aus beiden Eingangssignalen bildendes Ausgangssignal und
- einer Addiereinheit (38) mit einem ersten Eingang für das Ausgangssignal der ersten Multiplikationseinheit (32), einem zweiten Eingang für das Ausgangssignal der zweiten Multiplikationseinheit (34), einem dritten Eingang für das Ausgangssignal der dritten Multiplikationseinheit (36) und mit einem Ausgang für ein die Summe der drei Eingangssignale bildendes und damit die Ordnungsnummer der Subklasse repräsentierenden Ergebnissignal, das den Wert W_{E} des statistisch wahrscheinlichsten Ergebnisses repräsentiert.

7. Schaltung nach Anspruch 6, **dadurch gekennzeichnet, dass** innerhalb der Ergebniswertebereiche der Maximalereignisklasse und derjenigen Klasse mit dem nächstkleineren Index Imax-1 oder mit dem nächstgrößeren Index Imax+2, der die größere Anzahl an Ergebnissen hat, derjenige Wert W_{E} ermittelt wird, der dem wahrscheinlichsten Ergebnis zuzuordnen ist.

## Claims

1. A method for determining the distance of an object from an optical ToF measuring device by evaluating a distance recording of the object obtained by means of the ToF measuring device, wherein the ToF measuring device comprises a transmitting unit for detection radiation that can be operated in a pulsed manner, a one- or two-dimensional photodiode array comprising photodiodes for receiving detection radiation reflected from an object, and a signal processing unit, wherein in the method
- the transmitting unit (16) emits multiple detection radiation pulses within a measurement interval, wherein at least one of the photodiodes in the photodiode array (24) is enabled to potentially receive reflected detection radiation, and
- using the signal processing unit (26)
- after each detection radiation pulse and before the next detection radiation pulse, it is determined whether the at least one or each photodiode of the photodiode array (24) that was enabled during the measurement interval has generated an amount of electrical charge that exceeds a noise threshold, and, if this is the case,
- the time at which, relative to a reference time such as the start of the transmission of the detection radiation pulse, the amount of electrical charge has been generated, and
- the time interval is determined within which, among a plurality of consecutive time intervals, each referenced to the reference time and identified by indices, the relevant amount of electrical charge was generated, and
- an event for said time interval is recorded, wherein each index records the midpoint of a time interval and thus represents the time difference from the reference time,
- for each photodiode for which one or more events have been recorded, a histogram, i.e. a distribution of the frequency of the events across time intervals, is generated after the last detection radiation pulse of the measurement interval,
- the time interval with the most events is determined based on each histogram, and said time interval is defined as the maximum event time interval, with its index defined as Imax,
- based on each histogram, N₋₁ is defined as the number of events in the time interval immediately preceding the maximum event time interval, and N₋₂ is defined as the number of events in the second time interval preceding the maximum event time interval,
- based on each histogram, N₊₁ is defined as the number of events in the time interval immediately following the maximum event time interval, and N₊₂ is defined as the number of events in the second time interval following the maximum event time interval, and
- within the maximum event time interval and either the time interval immediately preceding it or the time interval immediately following it, the time T_{A} is determined that, statistically speaking, is the most likely time for the generation of the electrical charge in the photodiode under consideration, and is given by ${T}_{A} = \left({N}_{+ 1}-{N}_{- 1}\right) {* k}_{1} + \left({N}_{+ 2}-{N}_{- 2}\right) * {k}_{2} + {T}_{Imax} * {k}_{0}$ with
- k₀ between 0.75 and 1.25, or between 0.9 and 1.1, or equal to 1,
- k₁ equal to 1/2^{a}, where a is between 5 and 9 or between 6 and 8, wherein a may be an integer or a fractional number within these ranges, or where a is equal to 7,
- k₂ equal to 1/2^{b}, where b is between 9 and 13 or between 8 and 12, and b can be an integer or a fractional number within these ranges, or where b is equal to 11, and
- T_{Imax} as the time representing the midpoint of the maximum event time interval relative to the reference time,
and
- based on the difference between this time and the reference time, as well as the speed of propagation of the detection radiation, the distance to a detection radiation reflection point on the object, from which the relevant photodiode has received detection radiation, is determined by the ToF measuring device.

2. The method according to claim 1, **characterized in that** the statistically most probable time T_{A} is calculated as lying within the maximum event time interval and within the one of the two time intervals immediately preceding and immediately following the maximum event time interval to which the greater number of events is assigned.

3. A circuit for performing the method according to claim 1 or 2, comprising
- a first subtraction unit (28) having a first input for a signal representing the number N₋₁, a second input for a signal representing the number N₊₁, and an output for an output signal representing the difference between the two input signals,
- a second subtraction unit (30) having a first input for a signal representing the number N₋₂, a second input for a signal representing the number N₊₂, and an output for an output signal representing the difference between the two input signals,
- a first multiplication unit (32) having a first input for the output signal of the first subtraction unit (28), a second input for a signal representing the coefficient k₁, and an output for an output signal representing the product of the two input signals,
- a second multiplication unit (34) having a first input for the output signal of the second subtraction unit (30), a second input for a signal representing the coefficient k₂, and an output for an output signal representing the product of the two input signals,
- a third multiplication unit (36) for a signal representing the index Imax of the maximum event class, a second input for a signal representing the coefficient k₀, and an output for an output signal forming the product of the two input signals, and
- an adding unit (38) having a first input for the output signal of the first multiplication unit (32), a second input for the output signal of the second multiplication unit (34), a third input for the output signal of the third multiplication unit (36), and having an output for a result signal forming the sum of the three input signals and thus representing the ordinal number of the subclass, which represents the value W_{E} of the statistically most probable result.

4. Use of the method according to claim 1 or 2 for a LIDAR device, in particular of a vehicle, comprising the transmitting unit (16) for pulsed detection radiation and the one- or two-dimensional photodiode array (24), as well as a transmission optical system associated with the transmitting unit for the detection radiation pulses and a reception optical system associated with the photodiode array (24) for detection radiation pulses reflected by an object, and comprising the signal processing unit (26).

5. Use of the circuit according to claim 3 for a LIDAR device, in particular of a vehicle, comprising the transmitting unit (16) for pulsed detection radiation and the one- or two-dimensional photodiode array (24), as well as a transmission optical system associated with the transmitting unit for the detection radiation pulses and a reception optical system associated with the photodiode array (24) for detection radiation pulses reflected by an object, and comprising the signal processing unit (26), wherein the signal processing unit (26) comprises the circuit according to claim 3.

6. A circuit for performing a method for determining the statistically most probable results of a defined event in a physical process, e.g., the statistically most probable time at which a defined event in a physical process will occur,
- wherein in the method
- the process is repeated a predetermined number of times, and the respective event result or a parameter representing it is recorded,
- the event results or the parameters representing them, i.e., for example, the times at which the events occurred, are assigned to individual, consecutive ranges of result values, such as individual, consecutive time intervals, which form classes, identified by indices, of a histogram that describes the distribution of the frequency of the event results,
- the class with the most event results is determined as the maximum event class and its index is defined as Imax,
- N₋₁ is defined as the number of event results in the class with the index Imax-1 as the next smallest index relative to the maximum event class, and N₋₂ is defined as the number of event results of the class with the index Imax-2 as the second next smallest index relative to the maximum event class,
- N₊₁ is defined as the number of event results in the class with the index Imax+1 as the next largest index relative to the maximum event class, and N₊₂ is defined as the number of event results of the class with the index Imax+2 as the second next largest index relative to the maximum event class, and
- within the result value ranges of the maximum event class and the class with either the next smallest index Imax-1 or the next largest index Imax+1, the value W_{E} that corresponds to the most probable result of the event is determined by calculating: ${W}_{E} = \left({N}_{+ 1}-{N}_{- 1}\right) {* k}_{1} + \left({N}_{+ 2}-{N}_{- 2}\right) * {k}_{2} + {W}_{Imax} * {k}_{0 ,}$ with
- k₀ between 0.75 and 1.25, or between 0.9 and 1.1, or equal to 1,
- k₁ equal to 1/2^{a}, where a is between 5 and 9 or between 6 and 8, wherein a may be an integer or a fractional number within these ranges, or where a is equal to 7,
- k₂ equal to 1/2^{b}, where b is between 9 and 13 or between 8 and 12, and b can be an integer or a fractional number within these ranges, or where b is equal to 11, and
- W_{Imax} as the value representing the midpoint of the range of result values for the maximum event class Imax,
- wherein the circuit is provided with
- a first subtraction unit (28) having a first input for a signal representing the number N₋₁, a second input for a signal representing the number N₊₁, and an output for an output signal representing the difference between the two input signals,
- a second subtraction unit (30) having a first input for a signal representing the number N₋₂, a second input for a signal representing the number N₊₂, and an output for an output signal representing the difference between the two input signals,
- a first multiplication unit (32) having a first input for the output signal of the first subtraction unit (28), a second input for a signal representing the coefficient k₁, and an output for an output signal representing the product of the two input signals,
- a second multiplication unit (34) having a first input for the output signal of the second subtraction unit (30), a second input for a signal representing the coefficient k₂, and an output for an output signal representing the product of the two input signals,
- a third multiplication unit (36) for a signal representing the index Imax of the maximum event class, a second input for a signal representing the coefficient k₀, and an output for an output signal forming the product of the two input signals, and
- an adding unit (38) having a first input for the output signal of the first multiplication unit (32), a second input for the output signal of the second multiplication unit (34), a third input for the output signal of the third multiplication unit (36), and having an output for a result signal forming the sum of the three input signals and thus representing the ordinal number of the subclass, which represents the value W_{E} of the statistically most probable result.

7. The circuit according to claim 6, **characterized in that** , within the result value ranges of the maximum event class and the class with the next smallest index Imax-1 or the next largest index Imax+2, whichever has the greater number of results, the value W_{E} that corresponds to the most probable result is determined.

## Revendications

1. Procédé de détermination de la distance d'un objet à un dispositif de mesure ToF optique par évaluation d'une mesure de distance de l'objet obtenue au moyen du dispositif de mesure ToF, où le dispositif de mesure ToF comprend une unité d'émission pouvant fonctionner de manière pulsée pour le rayonnement de détection, un réseau de photodiodes unidimensionnel ou bidimensionnel comprenant des photodiodes pour la réception du rayonnement de détection réfléchi par un objet et une unité de traitement du signal, où dans le procédé
- plusieurs impulsions de rayonnement de détection sont délivrées par l'unité d'émission (16) au cours d'un intervalle de mesure, où au moins l'une des photodiodes du réseau de photodiodes (24) est activée pour la réception potentielle du rayonnement de détection réfléchi, et
- au moyen de l'unité de traitement du signal (26)
- après chaque impulsion de rayonnement de détection et avant l'impulsion de rayonnement de détection suivante, on vérifie si la au moins une ou chaque photodiode du réseau de photodiodes (24) activée pendant l'intervalle de mesure a généré une quantité de charge électrique qui est supérieure à un seuil de bruit, et, lorsque c'est le cas
- l'instant où la quantité de charge électrique a été générée est déterminé par rapport à un instant de référence, comme par exemple le début de l'émission de l'impulsion de rayonnement de détection, et
- on détermine dans quel intervalle de temps d'une pluralité d'intervalles de temps temporellement successifs, rapportés à l'instant de référence, caractérisés avec des indices, la quantité de charge électrique en question a été générée, et
- un événement est enregistré pour cet intervalle de temps, où chaque indice enregistre l'instant moyen d'un intervalle de temps et représente ainsi la différence temporelle par rapport à l'instant de référence,
- pour chaque photodiode pour laquelle un ou plusieurs événements sont enregistrés, un histogramme, c'est-à-dire une distribution de la fréquence des événements sur les intervalles de temps, est créé après la dernière impulsion de rayonnement de détection de l'intervalle de mesure,
- à l'aide de chaque histogramme l'intervalle de temps avec la plupart des événements est déterminé et cet intervalle de temps est défini comme intervalle de temps d'événement maximal et son indice est défini comme Imax,
- à l'aide de chaque histogramme, le nombre des événements de l'intervalle de temps situé temporellement immédiatement avant l'intervalle de temps d'événement maximal est déterminé comme N₋₁ et le nombre des événements de l'intervalle de temps situé temporellement en deuxième position avant l'intervalle de temps d'événement maximal est déterminé comme N₋₂,
- à l'aide de chaque histogramme, le nombre des événements de l'intervalle de temps situé temporellement immédiatement après l'intervalle de temps d'événement maximal est déterminé comme N₊₁ et le nombre des événements de l'intervalle de temps situé temporellement en deuxième position après l'intervalle de temps d'événement maximal est déterminé comme N₊₂, et
- dans l'intervalle de temps d'événement maximal et dans l'intervalle de temps situé temporellement immédiatement avant celui-ci ou situé temporellement immédiatement après celui-ci, l'instant T_{A} qui, statistiquement parlant, est le plus probable comme instant pour la génération de la charge électrique de la photodiode considérée est déterminé et donné par ${T}_{A} = \left({N}_{+ 1}-{N}_{- 1}\right) {* k}_{1} + \left({N}_{+ 2}-{N}_{- 2}\right) * {k}_{2} + {T}_{Imax} * {k}_{0}$ avec
- k₀ entre 0,75 et 1,25 ou entre 0,9 et 1,1 ou égal à 1,
- k₁ égale 1/2^{a} avec a entre 5 et 9 ou entre 6 et 8, où a peut représenter des nombres entiers ou des nombres fractionnaires dans ces plages, ou avec a égale 7,
- k₂ égale 1/2^{b} avec b entre 9 et 13 ou entre 8 et 12, où b peut représenter des nombres entiers ou des nombres fractionnaires dans ces plages, ou avec b égale11 et
- T_{Imax} comme l'instant représentant l'instant médian de l'intervalle de temps d'événement maximal, par rapport à l'instant de référence,
et
- à l'aide de la différence entre cet instant et l'instant de référence, ainsi que de la vitesse de propagation du rayonnement de détection, la distance entre un point de réflexion de rayonnement de détection de l'objet, duquel la photodiode concernée a reçu le rayonnement de détection, et le dispositif de mesure ToF est déterminée.

2. Procédé selon la revendication 1, **caractérisé en ce que** l'instant le plus probable du point de vue statistique T_{A} est calculé comme étant situé dans l'intervalle de temps d'événement maximal et dans celui des deux intervalles de temps immédiatement adjacents, situés respectivement avant et après l'intervalle de temps d'événement maximal, auquel est associé le plus grand nombre d'événements.

3. Circuit pour la mise en œuvre du procédé selon la revendication 1 ou 2, avec
- une première unité de soustraction (28) avec une première entrée pour un signal représentant le nombre N₋₁, une deuxième entrée pour un signal représentant le nombre N₊₁ et avec une sortie pour un signal de sortie formant la différence entre les deux signaux d'entrée,
- une deuxième unité de soustraction (30) avec une première entrée pour un signal représentant le nombre N₋₂, une deuxième entrée pour un signal représentant le nombre N₊₂ et avec une sortie pour un signal de sortie formant la différence entre les deux signaux d'entrée,
- une première unité de multiplication (32) avec une première entrée pour le signal de sortie de la première unité de soustraction (28), une deuxième entrée pour un signal représentant le coefficient k₁ et avec une sortie pour un signal de sortie formant le produit des deux signaux d'entrée,
- une deuxième unité de multiplication (34) avec une première entrée pour le signal de sortie de la deuxième unité de soustraction (30), une deuxième entrée pour un signal représentant le coefficient k₂ et avec une sortie pour un signal de sortie formant le produit des deux signaux d'entrée,
- une troisième unité de multiplication (36) pour un signal représentant l'indice Imax de la classe d'événement maximale, une deuxième entrée pour un signal représentant le coefficient k₀ et avec une sortie pour un signal de sortie formant le produit des deux signaux d'entrée et
- une unité d'addition (38) avec une première entrée pour le signal de sortie de la première unité de multiplication (32), une deuxième entrée pour le signal de sortie de la deuxième unité de multiplication (34), une troisième entrée pour le signal de sortie de la troisième unité de multiplication (36) et avec une sortie pour un signal de résultat formant la somme des trois signaux d'entrée et représentant ainsi le numéro d'ordre de la sous-classe, qui représente la valeur W_{E} du résultat statistiquement le plus probable.

4. Utilisation du procédé selon la revendication 1 ou 2 pour un dispositif LIDAR, en particulier d'un véhicule, avec l'unité émettrice (16) pour le rayonnement de détection pulsé et le réseau de photodiodes unidimensionnel ou bidimensionnel (24) et un système optique d'émission associé à l'unité émettrice pour les impulsions de rayonnement de détection, ainsi qu'un système optique de réception associé au réseau de photodiodes (24) pour les impulsions de rayonnement de détection réfléchies par un objet et avec l'unité de traitement du signal (26).

5. Utilisation du circuit selon la revendication 3 pour un dispositif LIDAR, en particulier d'un véhicule, avec l'unité émettrice (16) pour le rayonnement de détection pulsé et avec le réseau de photodiodes unidimensionnel ou bidimensionnel (24) et un système optique d'émission associé à l'unité émettrice pour les impulsions de rayonnement de détection ainsi qu'un système optique de réception associé au réseau de photodiodes (24) pour les impulsions de rayonnement de détection réfléchies par un objet et avec l'unité de traitement du signal (26), dans lequel l'unité de traitement du signal (26) comprend le circuit selon la revendication 3.

6. Circuit pour la mise en œuvre d'un procédé pour déterminer le résultat statistiquement le plus probable d'un événement défini d'un processus physique, par exemple de l'instant statistiquement le plus probable pour l'occurrence d'un événement défini d'un processus physique,
- où, dans le procédé
- le processus est réalisé de manière répétée un nombre de fois prédéterminé et le résultat d'événement correspondant, ou un paramètre le représentant, est enregistré,
- les résultats d'événement, ou les paramètres qui les représentent, c'est-à-dire par exemple les instants où les événements se sont produits, sont associés à des plages de valeurs de résultat successives, par exemple des intervalles de temps successifs, qui forment des classes **caractérisées par** des indices d'un histogramme qui décrit la distribution de la fréquence des résultats d'événement,
- la classe avec la plupart des résultats d'événement est déterminée comme la classe d'événement maximal et son indice est défini comme Imax;
- N₋₁ est défini comme le nombre de résultats d'événement de la classe avec l'indice immédiatement inférieur Imax-1 par rapport à la classe d'événement maximal et N₋₂ est défini comme le nombre de résultats d'événement de la classe avec l'indice immédiatement inférieur en deuxième position Imax-2 par rapport à la classe d'événement maximal,
- N₊₁ est défini comme le nombre de résultats d'événement de la classe avec l'indice immédiatement supérieur Imax+1 par rapport à la classe d'événement maximal et N₊₂ est défini comme le nombre de résultats d'événement de la classe avec l'indice immédiatement supérieur en deuxième position Imax+2 par rapport à la classe d'événement maximal et
- dans les plages de valeurs de résultats de la classe d'événement maximal et de la classe avec l'indice immédiatement inférieur Imax-1 avec l'indice immédiatement supérieur Imax+1, la valeur W_{E} qui doit être associée au résultat le plus probable de l'événement est déterminée par le calcul suivant: ${W}_{E} = \left({N}_{+ 1}-{N}_{- 1}\right) {* k}_{1} + \left({N}_{+ 2}-{N}_{- 2}\right) * {k}_{2} + {W}_{Imax} * {k}_{0}$ avec
- k₀ entre 0,75 et 1,25 ou entre 0,9 et 1,1 ou égal à 1,
- k₁ égale 1/2^{a} avec a entre 5 et 9 ou entre 6 et 8, où a peut représenter des nombres entiers ou des nombres fractionnaires dans ces plages, ou avec a égale 7,
- k₂ égale 1/2^{b} avec b entre 9 et 13 ou entre 8 et 12, où b peut représenter des nombres entiers ou des nombres fractionnaires dans ces plages, ou avec b égale 11 et
- W_{Imax} comme valeur représentant le milieu de la plage de valeurs de résultat de la classe d'événement maximal Imax,
- où le circuit est muni de
- une première unité de soustraction (28) avec une première entrée pour un signal représentant le nombre N₋₁, une deuxième entrée pour un signal représentant le nombre N₊₁ et avec une sortie pour un signal de sortie formant la différence entre les deux signaux d'entrée,
- une deuxième unité de soustraction (30) avec une première entrée pour un signal représentant le nombre N₋₂, une deuxième entrée pour un signal représentant le nombre N₊₂ et avec une sortie pour un signal de sortie formant la différence entre les deux signaux d'entrée,
- une première unité de multiplication (32) avec une première entrée pour le signal de sortie de la première unité de soustraction (28), une deuxième entrée pour un signal représentant le coefficient k₁ et avec une sortie pour un signal de sortie formant le produit des deux signaux d'entrée,
- une deuxième unité de multiplication (34) avec une première entrée pour le signal de sortie de la deuxième unité de soustraction (30), une deuxième entrée pour un signal représentant le coefficient k₂ et avec une sortie pour un signal de sortie formant le produit des deux signaux d'entrée,
- une troisième unité de multiplication (36) pour un signal représentant l'indice Imax de la classe d'événement maximale, une deuxième entrée pour un signal représentant le coefficient k₀ et avec une sortie pour un signal de sortie formant le produit des deux signaux d'entrée et
- une unité d'addition (38) avec une première entrée pour le signal de sortie de la première unité de multiplication (32), une deuxième entrée pour le signal de sortie de la deuxième unité de multiplication (34), une troisième entrée pour le signal de sortie de la troisième unité de multiplication (36) et avec une sortie pour un signal de résultat formant la somme des trois signaux d'entrée et représentant ainsi le numéro d'ordre de la sous-classe, qui représente la valeur W_{E} du résultat statistiquement le plus probable.

7. Circuit selon la revendication 6, **caractérisé en ce que**, dans les plages de valeurs de résultat de la classe d'événement maximal et de la classe avec l'indice immédiatement inférieur Imax-1 ou avec l'indice immédiatement supérieur Imax+2 qui a le plus grand nombre de résultats, la valeur W_{E} qui doit être associée au résultat le plus probable est déterminée.
